# EUROPEAN PATENT APPLICATION

(11) **EP 4 477 075 A1**
(43) Date of publication of application: **18.12.2024**
(21) Application number: 23179370.4
(22) Date of filing: 14.06.2023
(51) Int. Cl.: A01K 1/015

(54) **ANIMAL LITTER WITH REDUCED DUST EMISSION**

(71) Applicant: Earth Alive Clean Technologies Inc., Montréal, Québec H2Z 1S4 (CA)
(72) Inventor: NEUFELD, Simon, Montréal, H2Z 1S4 (CA); TOUSSAINT, Claudia, Montréal, H2Z 1S4 (CA); SAFINA, Gulnaz, Montréal, H2Z 1S4 (CA)
(74) Representative: Calysta NV

(57) **Abstract**

Animal litter comprising absorbing mineral-based granules preferably with agglomerating powder and a series of biofilm forming bacterial strains.

## Description

The invention relates to cat litter, more particularly containing mineral-based granules and a preparation method thereof, in particular to green ecological dust-free cat litter and a preparation method thereof. Further, the present invention relates to a cat litter additive reducing dust.

The animal litter, especially small animal litter, more particularly cat litter, is a large consumption pet product. For animal litter currently available on the market, the criteria for choosing one animal litter is becoming more and more specific. Indeed, the litter material should be able to be solidified into blocks when contacted with feces and urine of the animal, and the litter material which is not contacted with the feces and urine should not be polluted; the litter material should be able to retain odours and should be dust free. Sometimes, a bacteriostatic or anti-bacterial property of the litter material is also sought.

With the ecological awareness of the population, the consumer also becomes more and more concerned by the ecological, even organic aspect of the products that he accepts at home. Pet products and animal litter is no exception to this rule.

However, the consumer does not intend to renounce the quality of the litter and always looks for the anti-dust properties, for the agglomeration of soiled parts, good absorption rates etc.

Yet all of these litter properties were typically imparted by either polymer granules, or by treating the mineral-based granular material with petroleum-based chemical additives to confer special properties.

There is accordingly a need to provide an animal litter which is more environmentally friendly without compromising quality. More particularly, there is a need to provide a dust-free litter material which contains mineral-based granules for their high absorption properties and preferably containing some binding agent to provide the agglomeration properties which is more ecological and not having recourse mandatorily to petroleum-based chemical additives.

To this end, the present invention provides an animal litter comprising absorbing mineral-based granules and a series of biofilm forming bacterial strains, preferably comprising agglomerating powder.

As it can be understood, the animal litter according to the present invention is a dust free litter material comprising a series of bacterial strains producing natural polymers such as polysaccharides and protein matrix, also known under the name of biofilm to bind dust particles together and therefore avoiding their escape in the surrounding atmosphere.

While most of the litter material are disclosed with either bacteriostatic or bactericide ingredients to avoid growth of microorganism in animal litter, it has been realised according to the present invention having a series of bacterial strains which will form biofilm is an attractive alternative to petroleum-based chemicals to reduce the emission of dust of the mineral-based granules and optionally of the binding powder. The bacterial strains have shown a sufficient dust reducing capability to stick to the dust emission criteria applicable for animal litter or consumer products. Accordingly, the present invention is able to provide an organic alternative to petroleum-based chemistry related to dust suppression in animal litter.

More preferably according to the present invention, the said series of biofilm forming bacterial strains is chosen amongst the Bacillus genus.

In a preferred embodiment of the animal litter according to the present invention, said series of biofilm forming bacterial strains is a cocktail of more than one strain of the Bacillus genus, for example chosen amongst the species B. subtilis, B. pumilis, B. licheniformis, B. velezensis, B. megaterium, B. amyloliquefaciens.

In another preferred embodiment of the animal litter according to the present invention, said series of biofilm forming bacterial strains is a cocktail of more than 3 strains of the Bacillus genus, preferably more than 4 strains of the Bacillus genus, more preferably more than 5 strains of the Bacillus genus.

In yet a preferred embodiment of the animal litter according to the present invention, said series of biofilm forming bacterial strains is coated on said mineral based granules.

In a particular embodiment of the animal litter according to the present invention, said series of biofilm forming bacterial strains is present at an amount of at least 1.0 × 10³ cfu/g of animal litter, advantageously at an amount of at least 5.0 × 10³ cfu/g of animal litter, more advantageously at an amount of at least 8.0 × 10³ cfu/g of animal litter, preferably at an amount of at least 1.0 × 10⁴ cfu/g of animal litter, in particular at an amount of at least 5.0 × 10⁴ cfu/g of animal litter, preferably at an amount of at least 1.0 × 10⁵ cfu/g of animal litter, in particular at an amount of at least 5.0 × 10⁵ cfu/g of animal litter, more particular at an amount of at least 8.0 × 10⁵ cfu/g of animal litter, more preferably at an amount of at least 1.0 × 10⁶ cfu/g of animal litter, and even more preferably at an amount of at least 1.0 × 10⁷ cfu/g of animal litter.

In a very particular embodiment of the animal litter according to the present invention, said series of biofilm forming bacterial strains is adsorbed on a latex binder, preferably on a biobased latex binder having surfactant properties, more preferably on a biobased starch latex binder, more preferably on a biobased modified starch latex binder.

More specifically, according to the present invention, said latex binder is a powder.

More preferably, the animal litter according to the present invention comprises at least one tackifying agent chosen amongst glycerol, Arabic gum, xanthan gum, acacia gum, agar gum, lignosulfonate, molasses.

More preferably, the animal litter according to the present invention comprises at least one additional agent chosen amongst Bronopol or Lutensol AT25,

While the dust suppressant additive for cat litter will be applied at a liquid state to the mineral-based granule and to the agglomerating powder, where the liquid phase comprises said at least one tackifying agent in water, the present invention provide a liquid portion having a tackiness sufficient to bind dust particles together in a first stage and the natural polymers produced by the biofilm forming bacterial strains in a second stage, to further bind said dust particles together.

According to the present invention, said mineral-based granules contain granules of a material chosen amongst sepiolites, attapulgites, diatomites, margins, zeolites, calcites, dolomites, slates, pumice, gypsum, bentonites, in particular sodium bentonite, tubermorites, building residues, and mixtures thereof.

More preferably, according to the present invention, said agglomerating powder is a sepiolite component selected from micronized sepiolite, rheological grade sepiolite, or mixtures thereof, which acts as a batting or binding agent.

In a preferred embodiment, said mineral-based granules have a particle size distribution from 0.20 to 5 mm, preferably from 0.22 to 4 mm, more preferably from 0.25 to 3.5 mm, in particular from 0.5 to 3.5 mm.

In another preferred embodiment of the animal litter according to the present invention the mineral-based granules further contain a polymer. The polymer can be a bio-based polymer. The polymer can be also a functional polymer such as an odour suppressant polymer or an additional additive to confer some special properties to the animal litter or yet a polymer to protect the bacterial strains and promote their growth, for example in keeping the biofilm forming bacterial strain in a status where they are the most biofilm forming status.

Indeed, Maxime Ardé et al. reported in the thesis "Dynamique de formation des biofilms de Bacillus subtilis à l'interface eau-air: expériences et modélisation" that the sedentary phenotype is the one where the bacterial strains are producing the biofilm. Therefore, giving to the bacterial strains the most suitable environment for reaching the "sedentary phenotype" (by contrast to the "nomad phenotype") will accelerate the biofilm production phase of the bacterial strains.

In a particular embodiment, the animal litter according to the present invention further comprises a vegetal component, in mixture with the mineral-based granules, such as a vegetal component selected from sawdust, straw, wood chips, paper pulp, paper residues, corn fibers, and mixtures thereof.

More preferably, in a specific embodiment, the animal litter according to the present invention comprises:
- from 90 to 99.8 wt% mineral-based granules based on the total weight of the animal litter,
- from 0.2 to 9.9 wt% of a vegetal component based on the total weight of the animal litter,
- from 0.001 to 0.5 wt% of said series of bacterial strains
- from 0.001 to 5 wt% of a latex binder.

In some applications, animal litters have further a special additive to provide binding capacity to mineral-based granules, i.e. clays and porous materials in granular form, for example to effectively absorb liquid animal waste and form mass stable agglomerates thereby allowing removal of the waste from clean particles.

Indeed, in some applications, while the agglomeration properties of animal litters are very good, the absorption properties are not that high. In other cases, the absorption properties are very good, but the binding properties to form agglomerates are not that good. In some cases, the wetted particles with good absorption properties may not yet have acquired the right mechanical strength when the animal deposits their excrements on the litter. This means that, after deposition of excreta, the animal is able to step in wetted particles not yet enough resistant and spread parts of agglomerates in the remainder of the littermate, thereby making the cleaning complex and resulting in the contamination of more particles than necessary.

In a preferred embodiment, the animal litter according to the present invention can comprise a binder additive preferably under the form of a granular material to be mixed with mineral-based granules comprising
(i) an aqueous-dispersible polysaccharide,
(ii) A nonaqueous polyhydroxy liquid carrier that does not deactivate the polysaccharide;
(iii) - A sepiolite component selected from micronized sepiolite, rheological grade sepiolite, or mixtures thereof, which acts as a batting or binding agent.

The aqueous-dispersible polysaccharide is selected from natural or modified gums, celluloses, starches, and mixtures thereof. In a preferred embodiment of the invention the polysaccharide is guar gum.

The polyhydroxy liquid carrier is selected from polyalcohols, polyalcohol derivatives and mixtures thereof. In a preferred embodiment of the invention the liquid carrier is glycerol or glycerin.

Preferably, the sepiolite component of the binder additive is selected from finely ground sepiolite, micronized sepiolite, rheological grade sepiolite or mixtures thereof as batting agent, since natural sepiolite presents acicular particles that form bundles or aggregates that are held together thanks to the existence of inter-particle forces, so that the aggregates do not spontaneously break apart when the natural sepiolite is dispersed in water or other liquids.

In particular, the finely ground sepiolite, which can be employed in the additive of the present invention, preferably consists essentially of particles with a size of less than 40 µm.

In another particular embodiment, the micronized sepiolite which can be employed in the additive of the present invention, preferably comprises 81% by weight, more preferably 97% by weight, of particles with a size of less than 5 µm.

In another particular embodiment, rheological grade sepiolite on the other hand is obtained by special micronization processes that deagglomerates the beams into their individual particles, rheological grade sepiolite is obtained that is easily dispersed in water and other polar liquids (see for example EP-A-0170299). Rheological grade sepiolite is also being manufactured and sold by TOLSA, S.A., Madrid under the name PANGEL.

The additive according to the invention is effective in both clay minerals and absorbent porous substrates which themselves do not exhibit substantially binding capacity when contacted with water or liquids, so that upon absorption of water and liquids, they do not swell but retain liquids in their structure without appreciable variations in their mechanical properties and in the physical appearance of their constituent particles, such as in relation to bentonite with respect to which the addition of the additive leads to the formation of clumps of higher strength than conventional bentonite.

In one embodiment, the binder additive, preferably under the form of a granular material, to be mixed with mineral-based granules, contains 20 to 45%, preferably 30 to 45% by weight of the aqueous-dispersible polysaccharide, 20 to 45%, preferably 30 to 45% by weight of the non-aqueous polyhydroxylated liquid carrier that does not deactivate the polysaccharide; and 10 to 25%, preferably 15 to 25 % by weight of a sepiolite component selected from finely ground sepiolite, micronized sepiolite, rheological grade sepiolite, or mixtures thereof.

The animal litter according to the present invention is especially suitable as a cat litter, but its application in litters for other small animals such as hamsters, guinea pigs, rabbits etc., is also entirely satisfactory.

Other embodiments of the animal litter according to the present invention are mentioned in the appended claims.

Other characteristics, details and advantages according to the present invention will be derived from the following description, without being limited thereto and by making reference to drawings and examples.

Other embodiments of the method according to the present invention are mentioned in the appended claims and the subsequent description of an embodiment of the invention.

Other characteristics and advantages of the present invention will be derived from the non-limitative following description, and by making reference to the drawings and the examples.

### Examples.-

Various formulations of animal litter were made to evaluate the dust control effect by a Drop test.

Dust emissions from each sample were evaluated by dropping 20-25 grams of material in a closed chamber while an attached dust monitor logged airborne particulate over time. The tests were performed 4-7 days after treatment.

The Drop test methodology consists of:
1. Measure out 20-25 grams of each treated sample into clean labelled dishes.
2. Process each sample one at a time using the following drop test procedure:
   a. Connect the DustTrak DRX Aerosol Monitor 8533 to the drop cylinder using the flexible hose (Figure 3).
   b. Set the DustTrak RunMode to 2-minute duration, with 1 second sampling frequency.
   c. Start the DustTrak logging.
   d. Wait 30 seconds to allow readings to settle to a consistent background level.
   e. Lift the top cover of the cylinder, quickly drop the sample material into the cylinder and replace the top cover.
   f. Allow the DustTrack to run for the full 2-minute duration.
   g. Disconnect the DustTrack, clean the drop cylinder using cloths and anti-static sheets.
   h. Discard the dropped sample material and clean the bottom plate.
   i. Replace equipment and proceed to the next sample.
3. Import the data into Excel, calculate the maximum dust level recorded for each sample and produce summary statistics.

### Example 1.- Samples preparation

Untreated sepiolite was divided into size fractions using sieves to determine the material's size distribution. It was then re-combined into equal samples containing the same particle size distribution. This ensured that each formulation was applied to a sample of sepiolite with the same percentages of fine, medium, and coarse fractions.

### Example 2.- Dust suppression formulation 1

A dust suppression formulation 1 was prepared by adding the following weight% with respect to the total weight of the formulation: 95w% water, 4.88w% binder and 0.1 1w% of a series of biofilm forming bacterial strains. This series consists of a mixture of B. subtilis, B. licheniformis, B. megaterium and B. amyloliquefaciens.

The dust suppression formulation 1 is produced by mixing the various ingredients together and then blending for at least 30 minutes until the solutions reached a homogenous condition.

Dust suppression formulation 1 is then applied to two untreated sepiolite samples from example 1 using a spraying nozzle to achieve an even distribution with two different conditions as described below.
- Condition 1: 90% of sepiolite from example 1 and 10% of dust suppression formulation 1 (% w/w), with an amount of 8.8 × 10⁵ cfu of said series of biofilm forming bacterial strains per gram of animal litter.
- Condition 2: 99.50% of sepiolite from example 1 and 0.50% of dust suppression formulation 1 (% w/w), with an amount of 4.4 × 10⁴ cfu of said series of biofilm forming bacterial strains per gram of animal litter.

The samples were packaged in sealed bags to form animal litter 1 according to the present invention.

The treated animal litters were submitted to the aforementioned drop test 4-7 days after production.

The maximum dust emissions recorded for the animal litter 1 were analysed and the results are presented below:
- Condition 1: The measured dust level is 2.51 mg/m³ corresponding to -93% in percentage of reduction in comparison to untreated sepiolite sample.
- Condition 2: The measured dust level is 16.80 mg/m³ corresponding to -43% in percentage of reduction in comparison to untreated sepiolite sample.

### Example 3.- Dust suppression formulation 2

A dust suppression formulation 2 was prepared by adding the following weight% with respect to the total weight of the formulation: 80.04% water, 19.52% binder and 0.44% of a series of biofilm forming bacterial strains. This series consists of a mixture of B. subtilis, B. licheniformis, B. megaterium and B. amyloliquefaciens.

The dust suppression formulation 2 is produced by mixing the various ingredients together and then blending for at least 30 minutes until the solutions reached a homogenous condition.

Dust suppression formulation 2 is then applied to one untreated sepiolite sample from example 1 using a spraying nozzle to achieve an even distribution with the condition described below.
- Condition 1: 97.5% of sepiolite from example 1 and 2.5% of dust suppression formulation 2 (% w/w), with an amount of 8.8 × 10⁵ cfu of said series of biofilm forming bacterial strains per gram of animal litter.

The samples were packaged in sealed bags to form animal litter 2 according to the present invention.

The animal litter 2 was submitted to the aforementioned drop test 7 days after production.

The maximum dust emissions recorded for the animal litter 2 were analysed and the result is presented below:
- Condition 1: The measured dust level is 19.1 mg/m³ corresponding to -74% in percentage of reduction in comparison to untreated sepiolite sample.

### Example 4.- Dust suppression formulation 3

A dust suppression formulation 3 was prepared by adding the following weight% with respect to the total weight of the formulation: 59.4% water, 39.6% glycerin, 0.98% binder and 0.02% of a series of biofilm forming bacterial strains. This series consists of a mixture of B. subtilis, B. licheniformis, B. megaterium and B. amyloliquefaciens.

The dust suppression formulation 3 is produced by mixing the various ingredients together and then blending for at least 30 minutes until the solutions reached a homogenous condition.

Dust suppression formulation 3 is then applied to one untreated sepiolite sample from example 1 using a spraying nozzle to achieve an even distribution with the following condition:
- Condition 1: 90% of sepiolite from example 1 and 10% of dust suppression formulation 3 (% w/w), with an amount of 1.6 × 10⁵ cfu of said series of biofilm forming bacterial strains per gram of animal litter.

The samples were left out overnight to dry and then packaged in sealed bags to form animal litter 3 according to the present invention.

The animal litter 3 was submitted to the aforementioned drop test 7 days after treatment.

The maximum dust emissions recorded for the animal litter 3 were tested, analysed and the result is presented below:
- Condition 1: The measured dust level is 3.06 mg/m³ corresponding to -91% in percentage of reduction in comparison to untreated sepiolite sample.

### Example 5.- Dust suppression formulation 4

A dust suppression formulation 4 was prepared by adding the following weight% with respect to the total weight of the formulation: 20.07% water, 79% glycerin, 0.91% binder and 0.02% of a series of biofilm forming bacterial strains. This series consists of a mixture of B. subtilis, B. licheniformis, B. megaterium and B. amyloliquefaciens.

The dust suppression formulation 4 is produced by mixing the various ingredients together and then blending for at least 30 minutes until the solutions reached a homogenous condition.

Dust suppression formulation 4 is then applied to two untreated sepiolite samples from example 1 using a spraying nozzle to achieve an even distribution with the following conditions:
- Condition 1: 99% of sepiolite from example 1 and 1% of dust suppression formulation 4 (% w/w), with an amount of 1.6 × 10⁴ cfu of said series of biofilm forming bacterial strains per gram of animal litter.
- Condition 2: 99.50% of sepiolite from example 1 and 0.50% of dust suppression formulation 4 (% w/w), with an amount of 8.0 × 10³ cfu of said series of biofilm forming bacterial strains per gram of animal litter.

The samples were packaged in sealed bags to form animal litter 4 according to the present invention.

The animal litter 4 was submitted to the aforementioned drop test 4 days after production.

The maximum dust emissions recorded for the animal litter 4 under the 2 conditions were analysed and the results are presented below:
- Condition 1: The measured dust level is 12.7 mg/m³ corresponding to -57% in percentage of reduction in comparison to untreated sepiolite sample.
- Condition 2: The measured dust level is 10.50 mg/m³ corresponding to -65% in percentage of reduction in comparison to untreated sepiolite sample.

### Example 6.- Dust suppression formulation 5

A dust suppression formulation 5 was prepared by adding the following weight% with respect to the total weight of the formulation: 95% water, 0.22% binder, 4.76% of acacia gum and 0.01% of a series of biofilm forming bacterial strains. This series consists of a mixture of B. subtilis, B. licheniformis, B. megaterium and B. amyloliquefaciens.

The dust suppression formulation 5 is produced by mixing the various ingredients together and then blending for at least 30 minutes until the solutions reached a homogenous condition.

Dust suppression formulation 5 is then applied to one untreated sepiolite sample from example 1 using a spraying nozzle to achieve an even distribution with the following condition:
- Condition 1: 90% of sepiolite from example 1 and 10% of dust suppression formulation 3 (% w/w), with an amount of 4.0 × 10⁴ cfu of said series of biofilm forming bacterial strains per gram of animal litter.

The samples were left out overnight to dry and then packaged in sealed bags to form animal litter 5 according to the present invention.

The animal litter 5 was submitted to the aforementioned drop test 7 days after production .

The maximum dust emissions recorded for the animal litter 5 were analysed and the result is presented below:
- Condition 1: The measured dust level is 2.45 mg/m³ corresponding to -96% in percentage of reduction in comparison to untreated sepiolite sample.

### Example 7.- Dust suppression formulation 6

A dust suppression formulation 6 was prepared by adding the following weight% with respect to the total weight of the formulation: 80.06% water, 0.88% binder, 19.04% of acacia gum and 0.02% of a series of biofilm forming bacterial strains. This series consists of a mixture of B. subtilis, B. licheniformis, B. megaterium and B. amyloliquefaciens.

The dust suppression formulation 6 is produced by mixing the various ingredients together and then blending for at least 30 minutes until the solutions reached a homogenous condition.

Dust suppression formulation 6 is then applied to one untreated sepiolite sample from example 1 using a spraying nozzle to achieve an even distribution with the following condition:
- Condition 1: 97.50% of sepiolite from example 1 and 2.50% of dust suppression formulation 6 (% w/w), with an amount of 4.0 × 10⁴ cfu of said series of biofilm forming bacterial strains per gram of animal litter.

The samples were packaged in sealed bags to form animal litter 6 according to the present invention.

The animal litter 6 was submitted to the aforementioned drop test 7 days after production.

The maximum dust emissions recorded for the animal litter 6 were analysed and the result is presented below:
- Condition 1: The measured dust level is 7.83 mg/m³ corresponding to -89% in percentage of reduction in comparison to untreated sepiolite sample.

### Example 8.- Dust suppression formulation 7

A dust suppression formulation 7 was prepared by adding the following weight% with respect to the total weight of the formulation: 87.1% water, 11.9% glycerin, 0.14% binder, 0.86% xanthan gum and 0.003% of a series of biofilm forming bacterial strains. This series consists of a mixture of B. subtilis, B. licheniformis, B. megaterium and B. amyloliquefaciens.

The dust suppression formulation 7 is produced by mixing the various ingredients together and then blending for at least 30 minutes until the solutions reached a homogenous condition.

Dust suppression formulation 7 is then applied to one untreated sepiolite sample from example 1 using a spraying nozzle to achieve an even distribution with the following condition:
- Condition 1: 90% of sepiolite from example 1 and 10% of dust suppression formulation 7 (% w/w), with an amount of 2.4 × 10⁴ cfu of said series of biofilm forming bacterial strains per gram of animal litter.

The samples were left out overnight to dry and then packaged in sealed bags to form animal litter 7 according to the present invention.

The animal litter 7 was submitted to the aforementioned drop test 7 days after production.

The maximum dust emissions recorded for the animal litter 7 were analysed and the result is presented below:
- Condition 1: The measured dust level is 2.04 mg/m³ corresponding to -96% in percentage of reduction in comparison to untreated sepiolite sample.

### Example 9.- Dust suppression formulation 8

A dust suppression formulation 8 was prepared by adding the following weight% with respect to the total weight of the formulation: 86.21% water, 11.78% glycerin, 0.28% binder, 1.72% xanthan gum and 0.01% of a series of biofilm forming bacterial strains. This series consists of a mixture of B. subtilis, B. licheniformis, B. megaterium and B. amyloliquefaciens.

The dust suppression formulation 8 is produced by mixing the various ingredients together and then blending for at least 30 minutes until the solutions reached a homogenous condition.

Dust suppression formulation 8 is then applied to one untreated sepiolite sample from example 1 using a spraying nozzle to achieve an even distribution with the following condition:
- Condition 1: 97.50% of sepiolite from example 1 and 2.50% of dust suppression formulation 8 (% w/w), with an amount of 1.2 × 10⁴ cfu of said series of biofilm forming bacterial strains per gram of animal litter.

The samples were packaged in sealed bags to form animal litter 8 according to the present invention.

The animal litter 8 was submitted to the aforementioned drop test 7 days after production.

The maximum dust emissions recorded for the animal litter 8 were analysed and the result is presented below:
- Condition 1: The measured dust level is 10.9 mg/m³ corresponding to -72% in percentage of reduction in comparison to untreated sepiolite sample.

It is not to be said that the present invention is limited to the specific aforementioned embodiments; modifications can be performed without departing from the scope of the claims.

## Claims

1. Animal litter comprising absorbing mineral-based granules and a series of biofilm forming bacterial strains, preferably comprising agglomerating powder.

2. Animal litter according to claim 1 wherein at least one strain of the said series of biofilm forming bacterial strains is chosen amongst the Bacillus genus.

3. Animal litter according to claim 1 or claim 2, wherein said series of biofilm forming bacterial strains is a cocktail of more than one strain of the Bacillus genus, for example chosen amongst the species B. subtilis, B. pumilis, B. licheniformis, B. velezensis, B. megaterium, B. amyloliquefaciens.

4. Animal litter according to any of the preceding claims, wherein said series of biofilm forming bacterial strains is a cocktail of more than 3 strains of the Bacillus genus, preferably more than 4 strains of the Bacillus genus, more preferably more than 5 strains of the Bacillus genus.

5. Animal litter according to any of the preceding claims, wherein said series of biofilm forming bacterial strains is coated on said mineral based granules.

6. Animal litter according to any of the preceding claims, wherein said series of biofilm forming bacterial strains is present at the time of production at an amount of at least 1.0 × 10³ cfu/g of animal litter, advantageously at an amount of at least 5.0 × 10³ cfu/g of animal litter, more advantageously at an amount of at least 8.0 × 10³ cfu/g of animal litter, preferably at an amount of at least 1.0 × 10⁴ cfu/g of animal litter, in particular at an amount of at least 5.0 × 10⁴ cfu/g of animal litter, preferably at an amount of at least 1.0 × 10⁵ cfu/g of animal litter, in particular at an amount of at least 5.0 × 10⁵ cfu/g of animal litter, more particular at an amount of at least 8.0 × 10⁵ cfu/g of animal litter, more preferably at an amount of at least 1.0 × 10⁶ cfu/g of animal litter, and even more preferably at an amount of at least 1.0 × 10⁷ cfu/g of animal litter.

7. Animal litter according to any of the preceding claims, wherein said series of biofilm forming bacterial strains is adsorbed on a latex binder, preferably on a biobased latex binder having surfactant properties, more preferably on a biobased starch latex binder, more preferably on a biobased modified starch latex binder.

8. Animal litter according to claim 7, wherein said latex binder is a powder.

9. Animal litter according to any of the preceding claims comprising at least one tackifying agent chosen amongst glycerol, Arabic gum, xanthan gum, acacia gum, agar gum, lignosulfonate, molasses.

10. Animal litter according to any of the preceding claims, wherein said mineral-based granules contain granules of a material chosen amongst sepiolites, attapulgites, diatomites, margins, zeolites, calcites, dolomites, slates, pumice, gypsum, bentonites, in particular sodium bentonite, tubermorites, building residues, and mixtures thereof.

11. Animal litter according to any of the preceding claims, wherein said mineral-based granules has a particle size distribution from 0.20 to 5 mm, preferably from 0.22 to 4 mm, more preferably from 0.25 to 3.5 mm, in particular from 0.5 to 3.5 mm.

12. Animal litter according to any of the preceding claims, wherein the mineral-based granules further contain a polymer.

13. Animal litter according to any of the preceding claims, further comprising a vegetal component, in mixture with the mineral-based granules, such as a vegetal component selected from sawdust, straw, wood chips, paper pulp, paper residues, corn fibers, and mixtures thereof.

14. Animal litter according to any of the preceding claims, comprising:
- from 90 to 99.8 wt% mineral-based granules based on the total weight of the animal litter,
- from 0.2 to 9.9 wt% of a vegetal component based on the total weight of the animal litter,
- from 0.001 to 0.5 wt% of said series of bacterial strains
- from 0.001 to 5 wt% of a latex binder.
